# EUROPEAN PATENT APPLICATION

(11) **EP 2 924 342 A1**
(43) Date of publication of application: **30.09.2015**
(21) Application number: 15160081.4
(22) Date of filing: 20.03.2015
(51) Int. Cl.: F21V 3/02, H01J 61/34

(54) **LIGHT COVER**

(30) Priority: 27.03.2014 US 201414226857
(71) Applicant: General Electric Company, Schenectady, New York 12345 (US)
(72) Inventor: Vasarhelyi, Tamas, 1044 HU Budapest (HU); Gergely, Jacint, 1044 HU Budapest (HU); Szabo, Gabor, 1044 HU Budapest (HU); Toth, Lorand Lehel, 1044 HU Budapest (HU)
(74) Representative: Cleary, Fidelma

(57) **Abstract**

According to some embodiments, a light cover (300) includes a first end (310) having an opening (312) adapted to receive an illuminating bulb portion of a compact fluorescent lamp. The light (300) cover may further include an outer surface (320) contoured substantially in the shape of an illuminating bulb portion of an incandescent light bulb, wherein the outer surface (312) is configured such that one or more open portions (322) are provided.

## Description

### FIELD OF THE INVENTION

Some embodiments described herein are associated with a light cover. In particular, in some embodiments, a light cover for a compact fluorescent light unit, the light cover having the general shape of an illuminating bulb portion of an incandescent light bulb and one or more open portions.

### BACKGROUND

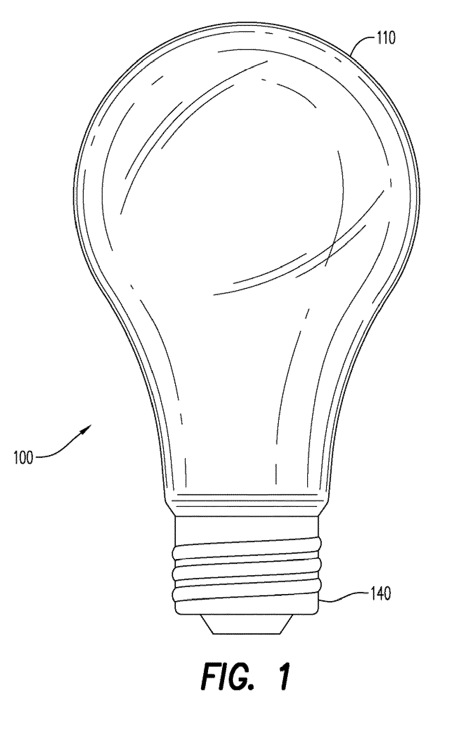

Traditional incandescent light bulbs have been in use for a substantial period of time. For example, FIG. 1 illustrates a traditional incandescent light bulb 100 including an illuminating bulb portion 110. The illuminating bulb portion 110 may comprise, for example, a translucent material, such as clear or frosted glass, housing a filament that generates light when conducting an electric current. The light bulb 100 further includes a base portion 140. The base portion 140 may, for example, include threads that can be screwed into a light socket to physically hold the light bulb 100 and also to electrically connect the light bulb 100 to an electric circuit. Because these traditional light bulbs 100 have been used for such a long time, consumers have become very comfortable with their look and feel.

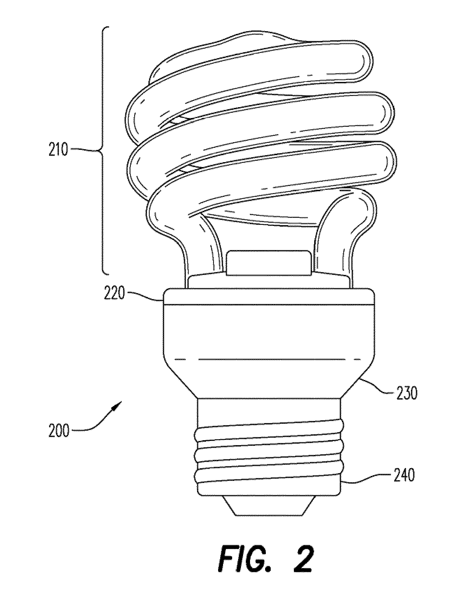

Note, however, that the traditional incandescent light bulb 100 may not be the most efficient way to provide illumination. For example, FIG. 2 illustrates a helical integrated compact fluorescent light 200 that may provide illumination more efficiently as compared to the light bulb 100 of FIG. 1. In particular, the compact fluorescent light 200 may provide the same amount of visible light as the bulb 100 of FIG. 1 but only use one-fifth to one-third of the electric power (and may also last eight to fifteen times longer). The compact fluorescent light 200 of FIG. 2 includes an illuminating bulb portion 210 such as a gas-filled glass tube that provides illumination. The illuminating bulb portion 210 is also coupled to a housing 230 via a collar 220. The housing 230 may include an electronic ballast and be coupled to a base portion 240.

Note, however, that consumers may not feel comfortable with the look and feel and operation of the compact fluorescent light 200. Moreover, note that the various components of the compact fluorescent light 200 may be sensitive to heating and ventilation conditions. The inventors have recognized that it would be beneficial to provide a compact fluorescent light apparatus and system having an improved look, feel, and operation.

### BRIEF DESCRIPTION OF THE DRAWINGS

Features and advantages of some embodiments, and the manner in which the same are accomplished, will become more readily apparent with reference to the following detailed description taken in conjunction with the accompanying drawings, which illustrate exemplary embodiments (not necessarily drawn to scale), wherein:
FIG. 1 illustrates a traditional incandescent light bulb;
FIG. 2 illustrates a helical integrated compact fluorescent light;
FIG. 3 comprises a light cover for a compact fluorescent light in accordance with some embodiments;
FIG. 4 illustrates a different light cover according to another embodiment of the invention;
FIG. 5 is an apparatus according to some embodiments;
FIG. 6 is an apparatus according to still other embodiments;
FIG. 7 illustrates a collar that may be used in the apparatus of FIG. 6 according to some embodiments;
FIG. 8 illustrates a housing that may be used in the apparatus of FIG. 6 in accordance with some embodiments; and
FIG. 9 is an example of a system in accordance with some of the embodiments described herein.

### DETAILED DESCRIPTION

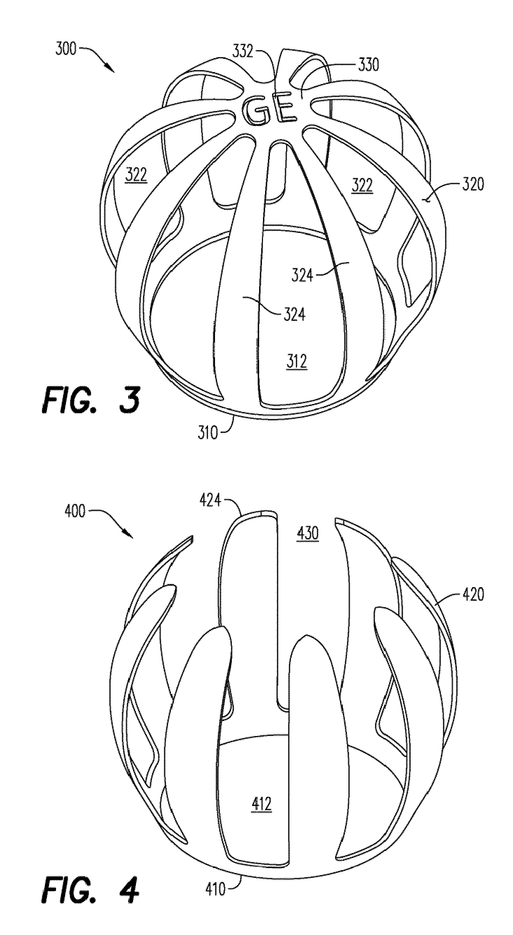

FIG. 3 comprises a light cover 300 in accordance with some embodiments. The light cover 300 includes a first end 310 having an opening 312 adapted to receive an illuminating bulb portion of a compact fluorescent lamp, such as the gas-filled tube of an integrated helical compact fluorescent lamp. That is, the opening 312 may have an appropriate size, shape and proportions to receive the illuminating bulb portion. By way of example only, the GE SPIRAL® T3 has a spiral illuminating bulb portion that is approximately 2.32 inches wide and, as a result the opening 312 may have a slightly larger diameter. Note that embodiments may be associated with any other type of fluorescent lamp.

The light cover 300 may further include an outer surface 320 contoured substantially in the shape of an illuminating bulb portion of an incandescent light bulb. In this way, an illuminating bulb portion of a compact fluorescent lamp may be inserted into the light cover 300 through the opening 312, and, as a result, consumers may be comfortable with the lamp's look and feel. As used herein, the phrase "incandescent light bulb" may refer to, for example, any size general service light bulb (e.g., A19, A21, or A3), a reflector light bulb (e.g., R20), or any other type of incandescent light source. By way of example only, an A21 incandescent light bulb, such as the GE REVEAL® 150 watt bulb, is approximately 2 and 5/8 inches wide at its widest point and has an overall length of approximately 5.37 inches (including the base). Note that embodiments might instead be associated with a globe type light bulb or a candle type light bulb.

Moreover, according to some embodiments, the outer surface 320 may be configured such that one or more open portions 322 are provided. In the example of FIG. 3, the open portions 322 are equally spaced, symmetric cuts between arms 324 of the outer surface 320 that extend from the first end 310 to a second end 330 opposite the first end 310. According to some embodiments, the cuts might not be symmetric and/or might not be equally sized or spaced. Note that the open portions 322 may provide an improved heating and ventilation exchange between an area inside the light cover 300 and an area outside the light cover 300. Moreover, this heating and ventilation exchange may improve the performance of a compact fluorescent lamp housed within the light cover 300. For example, by providing lower operating temperatures, relatively inexpensive ballast may be used and a pellet type Hg dose may be provided for the lamp allowing for a quicker start up time.

The light cover 300 may be formed of any suitable material, such a plastic, a transparent material, a translucent material, a clear material, and/or a non-transparent material. Moreover, according to some embodiments the open portions 322 may comprise empty spaces. According to other embodiments, the open portions 322 may contain suitable materials, including plastic, a transparent material, a translucent material, and/or a clear material. The selection of an appropriate material to occupy some or all of the open portions 322 may depend on, for example, an amount of light output and/or an amount of heating and ventilation exchange that is desired.

As illustrated in FIG. 3, the outer surface 320 is configured such that the second end 330 is substantially closed. That is, the arms 325 merge at the second end 330 so as to substantially enclose that portion of the light cover 300. According to some embodiments, the substantially closed second end 330 includes at least one open portion. In the example of FIG. 3, a "GE" logo 322 cutout may provide further heating and ventilation near a particularly temperature-sensitive portion of a compact fluorescent bulb. Of course, other cutout shapes may be possible, or, alternatively, no cutout may be employed.

FIG. 4 illustrates a light cover 400 according to another embodiment. As before, the light cover 400 includes a first end 410 having an opening 412 adapted to receive an illuminating bulb portion of a compact fluorescent lamp. In this case, however, the outer surface 420 is formed such that a second end 430, opposite the first end 410, is substantially open. That is, the arms 424 of the outer surface 420 do not meet at the second end 430 of the light cover 400. This may provide additional heating and ventilation and improve the performance of a compact fluorescent lamp contained within the light cover 400 (e.g., by cooling a particularly temperature-sensitive area near the top of the lamp's illuminating bulb).

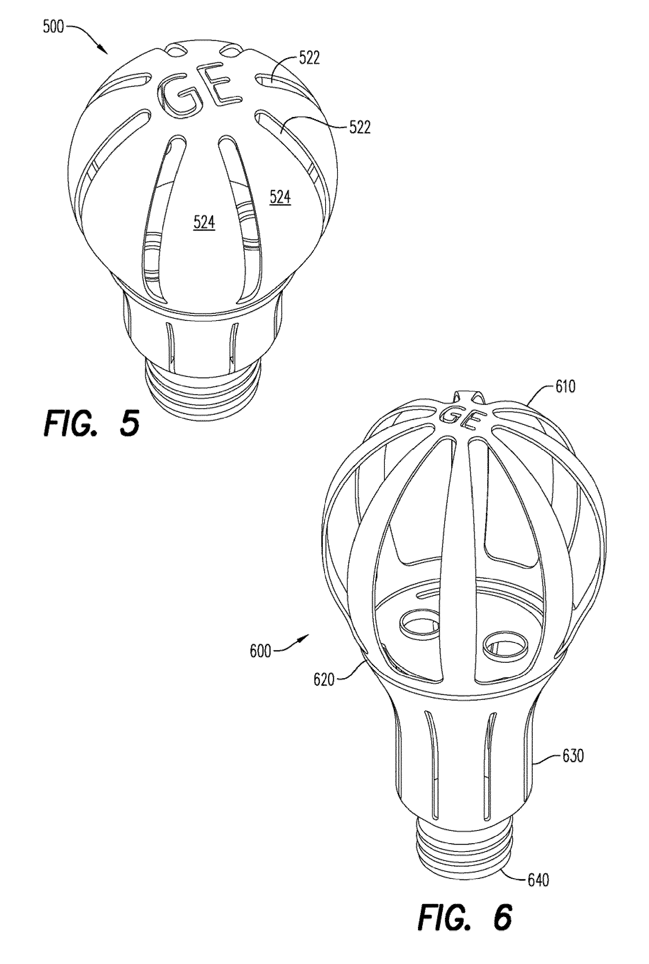

Although particularly-shaped open portions 322, 422 are illustrated in FIGS. 3 and 4, note that embodiments may utilize any number of different types, locations, sizes, and/or locations for these portions. For example, FIG. 5 illustrates a light cover have substantially wider arms 524 and narrower open portions 522 as compared to light covers 300, 400 provided as examples in FIGS. 3 and 4.

According to some embodiments, a light cover may be coupled or otherwise connected to one or more other elements of a compact fluorescent lamp. For example, FIG. 6 is an apparatus 600 that includes a light cover 610 coupled to a plastic housing 630 via a plastic collar 620. Note that the plastic housing 630 may include a bottom portion 640. According to some embodiments, the apparatus further includes an Edison base to be attached to a light socket (not illustrated in FIG. 6).

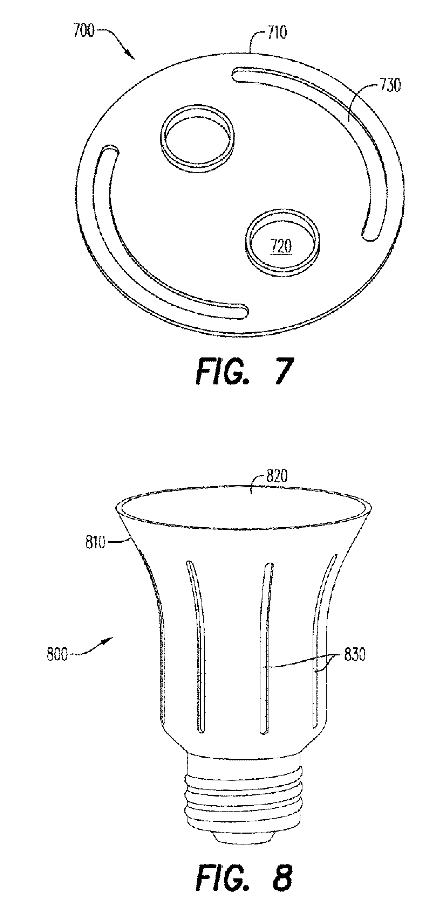

FIG. 7 illustrates a collar 700 that might be used in the apparatus 600 of FIG. 6 according to some embodiments. For example, the collar 700 may be formed by a collar body 710 that can be attached to a light cover at a first end. The collar body 710 may include one or more of open portions 720, 730. Some of the open portions 720 may allow for portions of an illuminating tube to pass through the collar body 710. Other open portions 730 may allow for a heating and ventilation exchange through the collar body 710.

FIG. 8 illustrates a housing 800 that might be used in the apparatus 600 of FIG. 6 in accordance with some embodiments. The housing may be formed by a housing body 810 having an opening 820 that can be attached to a light cover at a first end via a collar. The housing body 810 may also include one or more of open portions 830. Some of the open portions 830 may allow for a heating and ventilation exchange through the housing body 810, which may improve the performance of a compact fluorescent lamp's electronic ballast housed within the housing body 810 (and/or prevent damage to the circuitry). For example, by providing lower operating temperatures, relatively inexpensive ballast may be used and a pellet type Hg dose may be provided for the lamp allowing for a quicker start up time.

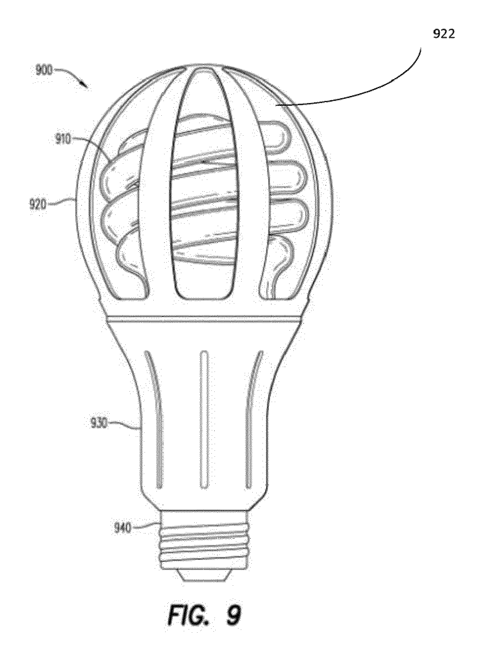

FIG. 9 is an example of a system 900 according to some embodiments described herein. The system 900 includes a compact fluorescent lamp 910, such as the GE SPIRAL® T3 which has a spiral illuminating bulb portion that is approximately 2.32 inches wide. The system 900 further includes a light cover 920 housing the illuminating bulb portion of the lamp 910 in accordance with some embodiments. The light cover 920 includes a first end having an opening adapted to receive the illuminating bulb portion of a compact fluorescent lamp 910. That is, the opening may comprise a circle having a diameter larger than 2.32 inches.

The light cover 920 may further include an outer surface contoured substantially in the shape of an illuminating bulb portion of an incandescent light bulb. In this way, consumers may be comfortable with the overall look and feel of the system 900. By way of example only, the outer surface of the light cover 920 may mimic an A21 incandescent light bulb, such as the GE REVEAL® 150 watt bulb which is approximately 2 5/8 inches wide at its widest point.

Moreover, according to some embodiments, the outer surface of the light cover 920 may be configured such that one or more open portions 922 are provided. In the example of FIG. 9, the open portions 922 are equally spaced, symmetric cuts between arms of the cover's outer surface that extend from the first end to a second end opposite the first end. Note that the open portions 922 may provide an improved heating and ventilation exchange between an area inside the light cover 920 and an area outside the light cover 920. Moreover, this heating and ventilation exchange may improve the performance of the compact fluorescent lamp 910 that is housed within the light cover 920. For example, by providing lower operating temperatures, relatively inexpensive ballast may be used and a pellet type Hg dose may be provided for the lamp allowing for a quicker start up time.

The light cover 920 may be formed of any suitable material, such a plastic, a transparent material, a translucent material, a clear material, and/or a non-transparent material. Moreover, according to some embodiments the open portions 922 may comprise empty spaces. According to other embodiments, the open portions 922 may contain suitable materials, including plastic, a transparent material, a translucent material, and/or a clear material. The selection of an appropriate material to occupy some or all of the open portions 922 may depend on, for example, an amount of light output and/or an amount of heating and ventilation exchange that is desired for the system. As illustrated in FIG. 9, the light cover 920 is configured such that the second end is substantially closed. That is, the arms merge at the second end so as to substantially enclose that portion of the light cover 920. According to some embodiments, the substantially closed second end includes at least one open portion to provide further heating and ventilation near a particularly temperature-sensitive portion of the compact fluorescent bulb 910. The light cover 920 may be attached to a housing 920 (e.g., via a collar) which in turn be coupled to a base portion 940 (e.g., to be screwed into a socket of a lighting fixture.

Thus, embodiments may allow for a method of illuminating an area, wherein at least one light cover may be provided including a first end having an opening adapted to receive an illuminating bulb portion of a compact fluorescent lamp. The light cover may further have an outer surface contoured substantially in the shape of an illuminating bulb portion of an incandescent light bulb, and the outer surface may be configured such that a plurality of open portions are provided. For each light cover, the compact fluorescent lamp may be provided with an illuminating bulb portion housed substantially within the light cover.

It should be understood that the above descriptions and/or the accompanying drawings are not meant to imply a fixed order or sequence of steps for any process referred to herein; rather any process may be performed in any order that is practicable, including but not limited to simultaneous performance of steps indicated as sequential.

Although the present invention has been described in connection with specific exemplary embodiments, it should be understood that various changes, substitutions, and alterations apparent to those skilled in the art can be made to the disclosed embodiments without departing from the spirit and scope of the invention as set forth in the appended claims.

## Claims

1. A light cover (300), comprising:
a first end (310) having an opening (312) adapted to receive an illuminating bulb portion of a compact fluorescent lamp; and
an outer surface (320) contoured substantially in the shape of an illuminating bulb portion of an incandescent light bulb, wherein the outer surface (320) is configured such that one or more open portions (322) are provided.

2. The light cover (300) of claim 1, wherein incandescent light bulb comprises one of: (i) a general service ("A") light bulb, (ii) a reflector ("R") light bulb, (iii) a globe type light bulb, or (iv) a candle type light bulb.

3. The light cover (300) of claim 1 or 2, wherein the light cover (300) is formed of at least one of: (i) plastic, (ii) a transparent material, (iii) a translucent material, (iv) a clear material, and (v) a non-transparent material.

4. The light cover (300) of any of claims 1 to 3, wherein the open portions (322) are empty.

5. The light cover (300) of any of claims 1 to 4, wherein open portions (322) contain at least one of: (i) plastic, (ii) a transparent material, (iii) a translucent material, and (iv) a clear material.

6. The light cover (300) of any of claims 1 to 5, further comprising:
a second end (330), opposite the first end (310), wherein the outer surface is configured such that the second end (330) is substantially closed.

7. The light cover (300) of any of claims 1 to 6, wherein the substantially closed second end (330) includes at least one open portion in the form of a logo (332).

8. The light cover (300) of any of claims 1 to 5, further comprising:
a second end (430), opposite the first end (410), wherein the outer surface (420) is configured such that the second end (430) is substantially open.

9. The light cover (300) of any preceding claim, wherein the open portions (322) are to provide a heating and ventilation exchange between an area inside the light cover (300) and an area outside the light cover (300).

10. The light cover (300) of any preceding claim, wherein the open portions (322) comprise a plurality of equally spaced, symmetric cuts.

11. The light cover (300) of any preceding claim, further comprising:
a collar (700) attached to the light cover (300) at the first end (310), the collar (700) having a plurality of open portions (730).

12. The light cover (300) of claim 11, further comprising:
a housing (800) attached to the collar (700) opposite the light cover (300), the housing (800) having one or more open portions (830).

13. A method for illuminating an area, comprising:
providing at least one light cover (300), including:
a first end (310) having an opening (312) adapted to receive an illuminating bulb portion of a compact fluorescent lamp (910); and
an outer surface (320) contoured substantially in the shape of an illuminating bulb portion of an incandescent light bulb, wherein the outer surface (320) is configured such that a plurality of open portions (322) are provided; and
for each light cover (300), providing the compact fluorescent lamp (910) having an illuminating bulb portion housed substantially within the light cover (300).

14. An apparatus comprising:
the light cover (300) as recited in any of claims 1 to 12; and
a compact fluorescent lamp having an illuminating bulb portion (910) housed substantially within the light cover (300).
